# FASCICULE DE BREVET EUROPEEN

(11) **EP 1 395 969 B1**
(45) Date de publication et mention de la délivrance du brevet: **13.07.2011**
(21) Numéro de dépôt: 02743326.7
(22) Date de dépôt: 22.05.2002
(51) Int. Cl.: G09B 21/00

(54) **PROCEDE ET SYSTEME D'ASSISTANCE A LA DETECTION DE SIGNAUX SONORES D'ALERTE POUR PERSONNE A DEFICIENCE AUDITIVE**
VERFAHREN UND ASSISTENZSYSTEM ZUR FESTSTELLUNG VON SCHALLALARMSIGNAL FÜR BENUTZER MIT HÖRSCHWÄCHE
METHOD AND SYSTEM FOR ASSISTANCE DETECTING ALARM SOUND SIGNALS FOR A PERSON WITH IMPAIRED HEARING

(30) Priorité: 25.05.2001 FR 0106893
(43) Date de publication de la demande: 10.03.2004
(73) Titulaire: FRANCE TELECOM, 75015 Paris (FR)
(72) Inventeur: MICHEL, Philippe, F-14000 Caen (FR)
(74) Mandataire: Loisel, Bertrand
(86) Numéro de dépôt international: PCT/FR2002/001728
(87) Numéro de publication internationale: WO 2002/095715

(56) Documents cités:
- WO-A-00/00938
- GB-A- 2 221 070
- US-A- 5 029 216

## Description

La présente invention concerne un système d'assistance à la détection de signaux sonores d'alerte pour personne à déficience auditive.

Plus particulièrement, l'invention a pour but de permettre à de telles personnes d'être averties et de reconnaître des signaux d'alerte engendrés dans différents contextes, comme par exemple lorsqu'elles se trouvent à leur domicile, dans la rue ou encore à bord d'un véhicule automobile, etc...

On sait en effet que les personnes à déficience auditive ont du mal à percevoir les signaux sonores d'alerte, tels que par exemple ceux émis par des sirènes d'alarme incendie ou autres, ou encore ceux émis par des véhicules prioritaires, tels que par exemple des véhicules de police, de gendarmerie, de pompier, d'urgence médicale, etc.., lorsqu'elles circulent dans la rue ou à bord d'un véhicule.

Or, on sait que la perception tardive ou même la non-perception de ces signaux, peut avoir des conséquences graves pour ces personnes.

On sait en effet par exemple, que lorsque des véhicules prioritaires circulent avec leur avertisseur sonore en marche, la circulation doit leur être dégagée afin de faciliter leur intervention.

Or, les personnes à déficience auditive peuvent avoir des problèmes pour percevoir cet avertissement sonore ou en tout cas le percevoir de manière tardive, ce qui peut entraîner, lorsqu'elles conduisent un véhicule, des problèmes de manoeuvre tardive ou brutale du véhicule, risquant de surprendre les autres conducteur.

D'autres problèmes peuvent être liés à la non-détection d'une sirène d'alarme incendie ou autre.

Il est connu par le document US 5 029 216 un dispositif d'aide visuelle pour la détection de signaux d'alarme embarqué sur un véhicule automobile. Ce dispositif comporte trois microphones disposés autour du véhicule selon des directions différentes et une antenne de réception RF. Lors de la réception d'un signal d'alarme et d'un signal RF émis par un véhicule d'urgence, un comparateur compare les signaux réceptionnés par les trois microphones pour donner une information concernant la direction du signal d'alerte correspondant à l'intensité la plus élevée.

Cependant, ce dispositif d'aide visuelle ne permet pas de distinguer les véhicules d'urgence entre eux et de déterminer le type d'alerte émis par ces véhicules.

Le but de l'invention est donc de résoudre ces problèmes. A cet effet, l'invention a pour objet un système d'assistance à la détection de signaux sonores d'alerte pour personne à déficience auditive embarqué à bord d'un véhicule automobile, caractérisé en ce qu'il comporte des moyens d'acquisition d'informations sonores dans l'environnement de la personne, et des moyens de traitement aptes à analyser le nombre et la fréquence des tonalités des signaux sonores pour reconnaître parmi ceux-ci des signaux d'alerte émis par des véhicules prioritaires, pour identifier le type d'alerte et, pour déclencher l'affichage d'informations visuelles d'identification correspondant à ce type d'alerte sur des moyens d'affichage.

L'invention sera mieux comprise à la lecture de la description qui va suivre, donnée uniquement à titre d'exemple et faite en se référant aux dessins annexés, sur lesquels:
- la Fig.1 représente un schéma synoptique illustrant la structure générale d'un système selon l'invention ;
- la Fig.2 représente un tableau de correspondance utilisé dans une application du système selon l'invention, en tant que système d'aide à la conduite d'un véhicule automobile pour personne à déficience auditive, permettant d'identifier le type d'un véhicule prioritaire émettant un signal d'avertissement : et
- la Fig.3 représente un organigramme illustrant le fonctionnement d'un tel système.

Comme cela a été indiqué précédemment, l'invention se rapporte à un système d'assistance à la détection de signaux sonores d'alerte pour personne à déficience auditive.

De façon générale, un tel système comporte des moyens d'acquisition d'informations sonores dans l'environnement de la personne et des moyens de traitement de ces informations pour reconnaître parmi celles-ci des informations correspondant à l'émission de signaux d'alerte pour déclencher l'affichage d'informations visuelles correspondantes d'avertissement de la personne sur des moyens d'affichage.

Ainsi, dans un tel système, il est prévu des moyens qui permettent de détecter dans l'environnement sonore de la personne, des signaux d'alerte particuliers, pour déclencher l'affichage d'informations visuelles correspondantes, ce qui permet à la personne, de percevoir une information correspondante.

Un tel système trouve de nombreuses applications, notamment à la détection de signaux émis par des sirènes d'alarme, par exemple incendie, ou émis par des véhicules prioritaires, ce qui permet par exemple d'assurer une aide à la conduite d'un véhicule automobile pour une telle personne à déficience auditive.

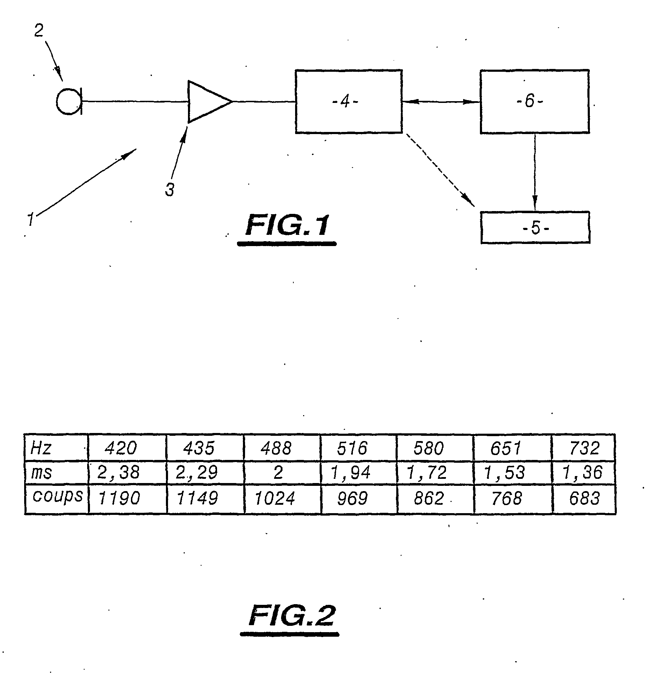

A titre d'exemple d'application de ce système, on a en effet représenté sur la figure 1, un système d'aide à la conduite d'un véhicule automobile, pour une personne à déficience auditive.

Ce système comporte des moyens d'acquisition d'informations sonores dans l'environnement du véhicule, ces moyens d'acquisition d'informations étant désignés par la référence générale 1 sur cette figure et comprenant par exemple au moins un microphone désigné par la référence générale 2, associé à des moyens 3 de mise en forme des signaux délivrés par ce microphone.

Ces moyens de mise en forme comprennent par exemple un amplificateur-écrêteur.

La sortie de ces moyens est reliée à l'entrée de moyens de traitement des informations délivrées par ces moyens d'acquisition, pour reconnaître parmi celles-ci, des informations correspondant à l'émission de signaux d'avertissement par des véhicules prioritaires.

Ces moyens de traitement d'informations sont désignés par la référence générale 4 sur cette figure et comprennent par exemple tout microprocesseur approprié.

Les moyens de mise en formé 3 sont adaptés pour délivrer, après adaptation des niveaux et des impédances, des signaux comparables à des signaux rectangulaires à ces moyens de traitement d'informations 4, qui vont alors détecter parmi ces signaux, les informations correspondant à l'émission de signaux d'avertissement par les véhicules prioritaires, en analysant le nombre et la fréquence des tonalités émises.

Comme cela sera décrit plus en détail par la suite, ceci permet à ces moyens de traitement d'informations, d'identifier le type de véhicule prioritaire.

En sortie, les moyens de traitement d'informations 4 sont adaptés pour déclencher l'affichage d'informations visuelles d'avertissement de la personne sur des moyens d'affichage embarqués à bord du véhicule.

Différents modes de réalisation de ces moyens d'affichage peuvent être envisagés.

C'est ainsi par exemple que ces moyens peuvent comporter un afficheur désigné par la référence générale 5 sur cette figure, par exemple intégré dans la planche de bord du véhicule, associé ou non par exemple à un ordinateur de bord 6 de celui-ci.

D'autres moyens d'affichage d'informations, tels que par exemple des moyens de projection de ces informations sur le pare-brise du véhicule, peuvent également être envisagés.

Les moyens d'affichage d'informations visuelles peuvent en effet présenter différentes structures appropriées, en allant du plus simple, en comprenant par exemple un simple témoin lumineux intégré au tableau de bord du véhicule, jusqu'à des systèmes plus complexes intégrant par exemple un afficheur graphique, qui, en fonction du type de véhicule reconnu par le microprocesseur, affiche un pictogramme correspondant au type de véhicule détecté et identifié, comme par exemple un véhicule de pompiers, de police, de gendarmerie, etc...

Cet afficheur peut bien entendu être piloté de différentes façons, en passant ou non par l'ordinateur de bord du véhicule.

La liaison entre ces différents organes peut par exemple être assurée par un réseau de transmission d'informations interne au véhicule, constitué par exemple par un bus filaire de type i2c, CAN, etc.. ou encore un lien radio comme par exemple un réseau de type sans fil « Blue Tooth » par exemple.

Les moyens de mise en forme 3 envoient sur le port d'entrée du microprocesseur 4, un signal et ce dernier est actif sur les fronts de ce signal. Ce microprocesseur compte alors les coups d'un cadenceur interne entre deux fronts montants ou descendants du signal.

Selon une variante de réalisation de ce microprocesseur, celui-ci peut mettre en oeuvre une boucle à verrouillage de phase s'accrochant sur une tonalité particulière.

Comme cela a été indiqué précédemment, l'identification du véhicule prioritaire peut se faire par analyse du nombre et de la fréquence des tonalités du signal sonore émis.

C'est ainsi par exemple qu'une sirène de véhicule de pompiers émet un signal à deux tons dont le premier est à 435 hertz et le second à 488 hertz. Chaque ton dure environ 1s.

On conçoit alors qu'il suffit que le microprocesseur 4 compte le nombre de coups de son cadenceur pendant 2,29 ms (période de 435 hz), attende la deuxième tonalité à 488 hz et compte à nouveau le nombre de coups du cadenceur pendant 2 ms (période de 488 hz).

L'affichage de l'information visuelle peut alors s'effectuer en deux temps, à savoir un premier temps au bout de quelques millisecondes permettant d'afficher la détection d'un véhicule prioritaire et un deuxième temps au bout d'une seconde maximum, permettant l'affichage de l'identification du véhicule, à savoir véhicule de pompiers, ambulance, etc..

Le réseau de transmission d'informations interne au véhicule permet à l'ordinateur de bord de charger les paramètres en fonction du pays dans lequel circule le véhicule.

Par exemple, pour la France, les paramètres sont :
- Type de véhicule : pompiers, gendarmerie, urgence médicale, police, ambulance,
- Nombre de tons :
- Pompier, urgence médicale, police, gendarmerie : 2
- Ambulance : 3
- Fréquence des tons :
- Premier ton sauf ambulance : 435 hz ; ambulance : 420 hz
- Deuxième ton :
   Pompier : 488 hz
   Urgence médicale : 651 hz
   Police : 580 hz
   Gendarmerie: 732 hz
   Ambulante : 516 hz
- Troisième ton :
   Ambulance : 420 hz + silence de 1,5 secondes
      - Nombre de cycles par minute :
   Pompier et ambulance : 25 à 30 cycles

Urgence médicale, police, gendarmerie : 50 à 60 cycles.

Cette architecture peut par exemple être basée sur l'utilisation d'un microcontrôleur de type 68HC705C8, dont le quartz est à 4 Mhz et l'horloge interne à 2Mhz.

Ce microcontrôleur possède un registre de capture du cadenceur sur les fronts montants ou descendants présentés sur la patte d'entrée de ce microcontrôleur.

Deux registres à huit bits forment un registre de capture d'entrée à 16 bits et récupèrent la valeur du cadenceur 16 bits dès que le capteur d'entrée détecte un front.

On lit alors d'abord l'octet de poids fort puis l'octet de poids faible. Le drapeau de capture également appelé par la suite ICF (pour Input Capture Flag) est établi à 1 (ICF = 1) quand un front est détecté et il est remis à zéro quand on lit l'octet de poids faible du registre.

Pour affiner la mesure et éviter les erreurs, on peut recommencer la boucle.

La figure 2 représente un tableau de correspondance entre les fréquences des tons utilisés et le nombre de coups du cadenceur du microprocesseur.

Ce tableau résume en fait les différentes valeurs mentionnées précédemment.

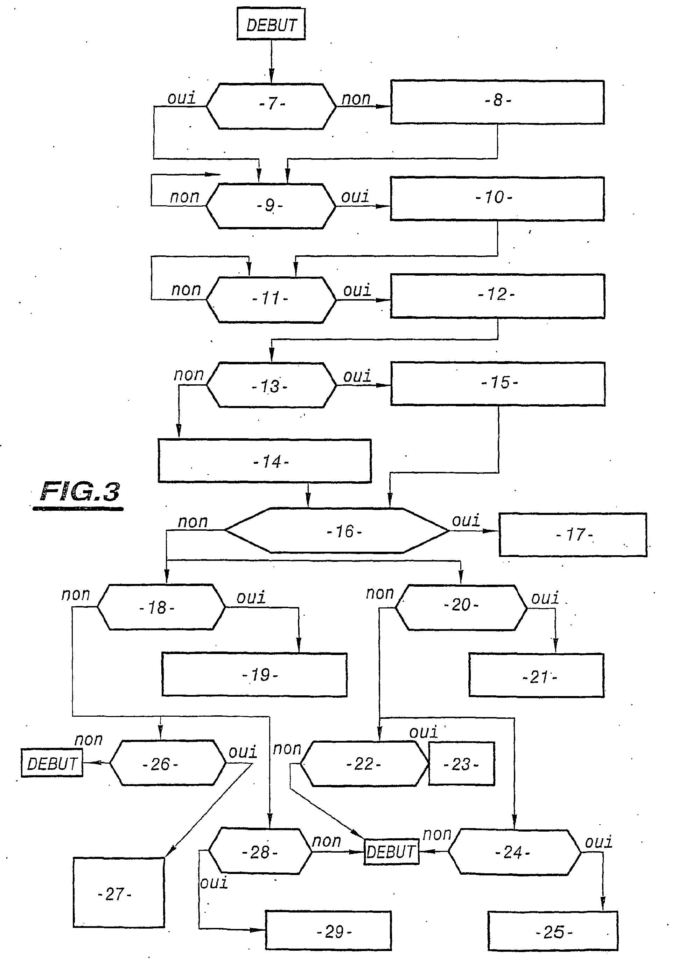

Enfin, on a représenté sur la figure 3, un organigramme illustrant le fonctionnement de ce système.

Lors de l'étape 7, on contrôle tout d'abord si le drapeau de capture est à zéro ou non.

Si ce n'est pas le cas, lors de l'étape 8, on lit l'octet de poids faible du registre de capture pour remettre à zéro ce drapeau.

Par contre, si c'est le cas, on passe à une étape 9 pour attendre le passage à 1 de ce drapeau. Si ce n'est pas le cas, on reboucle, tandis que si c'est le cas, on récupère la valeur du registre de 16 bits et la lecture des huit bits de poids faible remet automatiquement à zéro ce drapeau lors de l'étape 10.

A l'étape 11, on attend le nouveau passage à 1 du drapeau.

Si ce n'est pas le cas, on reboucle, tandis que si c'est le cas, on récupère la valeur du registre de 16 bits et la lecture des huit bits de poids faible remet automatiquement à zéro le drapeau, lors de l'étape 12.

En 13, on contrôle que la deuxième lecture est bien supérieure à la première. Si ce n'est pas le cas, il y a un dépassement du cadenceur et on fait un complément à deux de la première lecture. On détermine un résultat égal à la première lecture + la deuxième lecture lors de l'étape 14.

Par contre, si la réponse est positive en 13, on détermine un résultat égal à la deuxième lecture - la première lecture lors de l'étape 15.

Le résultat est ensuite comparé à différentes plages de valeurs pour identifier le type de véhicule.

C'est ainsi par exemple que lors de l'étape 16, on contrôle si le résultat est compris entre 964 et 974. Si c'est le cas, on détecte alors le deuxième ton émis par un véhicule de type ambulance et on déclenche l'affichage par exemple d'une information relative à la détection d'une ambulance lors de l'étape 17.

Si ce n'est pas le cas, on contrôle lors de l'étape 18, si le résultat est compris entre 1144 et 1154. Si c'est le cas, lors de l'étape 19, on a détecté un premier ton de tout type de véhicule sauf une ambulance.

On déclenche alors l'affichage de la détection d'un véhicule prioritaire et on recommence la détection pour affiner l'affichage.

Lors de l'étape 20, le résultat de l'étape 16 est également analysé pour déterminer s'il est compris entre 763 et 773. Si c'est le cas, on a détecté lors de l'étape 21, le deuxième ton d'un véhicule de type urgence médicale et on déclenche donc l'affichage correspondant.

Si ce n'est pas le cas, on compare en 22 si le résultat est compris entre 857 et 867. Si c'est le cas, on a détecté le deuxième ton d'un véhicule de police et on déclenche l'affichage correspondant en 23.

De même, en 24, on détermine si le résultat est compris entre 678 et 688. Si c'est le cas, on a détecté le deuxième ton émis par un véhicule de gendarmerie et on déclenche l'affichage correspondant en 25.

A l'issue de l'étape 18, si le résultat n'est pas compris entre 1144 et 1154, on analyse lors de l'étape 26 ce résultat, pour déterminer s'il est compris entre 1185 et 1195. Si c'est le cas, on a détecté le premier et le deuxième tons d'une ambulance et on déclenche donc lors de l'étape 27, l'affichage correspondant.

En 28, le résultat est également comparé aux valeurs 1019 et 1029 pour savoir s'il est compris entre celles-ci afin de permettre la détection du deuxième ton émis par un véhicule de pompiers et de déclencher l'affichage correspondant en 29.

Bien entendu, d'autres modes de réalisation de ce système peuvent être envisagés.

De plus, on peut également utiliser un tel système pour permettre grâce à un système de triangulation de localiser le véhicule prioritaire par rapport au véhicule de l'utilisateur.

Ceci peut par exemple être mis en oeuvre en utilisant trois microphones disposés par exemple en triangle sur le véhicule.

Le décalage entre les signaux de détection émis par ces différents microphones peut alors être utilisé pour calculer la position du véhicule prioritaire et par exemple déclencher l'affichage d'une information de localisation correspondante à destination de l'utilisateur.

Bien entendu, et comme cela a déjà été mentionné précédemment, d'autres applications de ce système peuvent être envisagées, comme par exemple, la détection de signaux d'alerte lorsqu'une telle personne à déficience auditive se trouve à son domicile ou circule en tant que piéton, par exemple dans la rue.

La structure générale du système reste alors analogue à ce qui a été décrit précédemment, c'est-à-dire qu'en fait, un tel système comporte toujours des moyens d'acquisition d'informations sonores dans l'environnement de la personne et des moyens de traitement de ces informations pour reconnaître parmi celles-ci, des informations correspondant à l'émission de signaux d'alerte pour déclencher l'affichage d'informations visuelles d'avertissement de la personne, sur des moyens d'affichage correspondants.

Ceci permet alors une reconnaissance de l'émission de signaux par exemple par des sirènes d'alarme incendie, etc..

Un tel système peut par exemple être intégré dans un boîtier autonome et portatif qu'une personne à déficience auditive, peut porter lorsqu'elle se déplace.

## Revendications

1. Système d'assistance à la détection de signaux sonores d'alerte pour personne à déficience auditive, embarqué à bord d'un véhicule automobile, **caractérisé en ce qu'**il comporte:
- des moyens (1) d'acquisition d'informations sonores dans l'environnement de la, personne, et
- des moyens (4) de traitement aptes à analyser le nombre et la fréquence des tonalités des signaux sonores pour reconnaître parmi ceux-ci des signaux d'alerte émis par des véhicules prioritaires, pour identifier le type d'alerte et pour déclencher l'affichage d'informations visuelles d'identification correspondant à ce type d'alerte sur des moyens d'affichage (5).

2. Système selon la revendication 1, **caractérisé en ce que** les moyens d'affichage (5) sont associés à un ordinateur de bord du véhicule.

3. Système selon la revendication 2, **caractérisé en ce que** les moyens d'affichage d'informations comprennent un afficheur intégré dans la planche de - bord du véhicule.

4. Système selon la revendication 3, **caractérisé en ce que** les moyens d'affichage d'informations comprennent des moyens de projection d'informations sur le pare-brise du véhicule.

## Claims

1. System for assistance in detecting alarm sound signals for a person with impaired hearing, said system being installed on a motor vehicle, **characterized in that** it comprises:
- means (1) for acquiring sound information in the environment of the person, and
- processing means (4) capable of analysing the number and the frequency of the tones of the sound systems in order to recognize amongst them alarm signals emitted by priority vehicles, in order to identify the type of alarm and to trigger the display of visual identification information corresponding to this type of alarm on display means (5).

2. System according to Claim 1, **characterized in that** the display means (5) are associated with a computer on board the vehicle.

3. System according to Claim 2, **characterized in that** the means for displaying information comprise a display incorporated into the dashboard of the vehicle.

4. System according to Claim 3, **characterized in that** the means for displaying information comprise means for projecting information onto the windscreen of the vehicle.

## Patentansprüche

1. Hilfssystem zur Erfassung von akustischen Warnsignalen für eine schwerhörige Person, das in ein Kraftfahrzeugs eingebaut ist, **dadurch gekennzeichnet, dass** es aufweist:
- Einrichtungen (1) zur Erfassung von akustischen Informationen in der Umgebung der Person, und
- Verarbeitungseinrichtungen (4), die die Anzahl und die Frequenz der Tonzeichen der akustischen Signale analysieren können, um darunter Warnsignale zu erkennen, die von Einsatzfahrzeugen ausgegeben werden, um die Art der Warnung zu identifizieren und um die Anzeige von visuellen Identifikationsinformationen, die dieser Art Warnung entsprechen, auf Anzeigeeinrichtungen (5) auszulösen.

2. System nach Anspruch 1, **dadurch gekennzeichnet, dass** die Anzeigeeinrichtungen (5) einem Bordcomputer des Fahrzeugs zugeordnet sind.

3. System nach Anspruch 2, **dadurch gekennzeichnet, dass** die Informationsanzeigeeinrichtungen ein Anzeigegerät enthalten, das in das Armaturenbrett des Fahrzeugs integriert ist.

4. System nach Anspruch 3, **dadurch gekennzeichnet, dass** die Informationsanzeigeeinrichtungen Einrichtungen zur Projektion von Informationen auf die Windschutzscheibe des Fahrzeugs enthalten.
